# EUROPÄISCHE PATENTSCHRIFT

(11) **EP 0 913 079 B1**
(45) Veröffentlichungstag und Bekanntmachung des Hinweises auf die Patenterteilung: **13.06.2001**
(21) Anmeldenummer: 98120598.2
(22) Anmeldetag: 30.10.1998
(51) Int. Cl.: A01D 78/10

(54) **Kreiselzettwender**
Rotary tedder
Faneuse rotative

(30) Priorität: 03.11.1997 DE 29719471 U
(43) Veröffentlichungstag der Anmeldung: 06.05.1999
(73) Patentinhaber: NIEMEYER Landmaschinen GmbH, D-48477 Hörstel-Riesenbeck (DE)
(72) Erfinder: Niemeyer, Reinhard, Dr., 48477 Hörstel (DE); Ungruh, Josef, 48429 Rheine (DE)

(56) Entgegenhaltungen:
- EP-A- 0 399 256
- EP-A- 0 465 819
- DE-A- 4 214 130
- DE-A- 4 301 084
- DE-U- 29 519 503
- DE-U- 29 622 222
- NL-A- 7 102 932

## Beschreibung

Die Erfindung betrifft einen Kreiselzettwender gemäß dem Oberbegriff des Anspruchs 1.

Kreiselzettwender können große Arbeitsbreiten erreichen und aus bis zu 12 Zinkenkreiseln und mehr bestehen. Die Arbeitsbreiten von Kreiselzettwendern ergeben sich aus der quer zur Fahrtrichtung angeordneten Anzahl von Zinkenkreiseln, deren Wirkungskreise sich gegenseitig überschneiden.

Aus der DE 296 22 222 U1 ist eine Heubearbeitungsmaschine bekannt, insbesondere Zinkenkreiselheuer, bei der unterhalb eines durchgehenden Maschinenrahmens das Getriebegehäuse angeschraubt ist, so daß lediglich der Antriebsteil des Getriebegehäuses in den Maschinenrahmen zur Durchführung der Antriebswelle hineinragt, mit dem Ziel einer einfachen Anbringung eines Stellhebels zwischen dem Maschinenrahmen und dem außenliegenden Teil des Getriebegehäuses. Nachteilig hierbei ist, daß die Vormontage des Getriebes mit der das Getriebe durchquerenden Antriebswelle bei geschlossenem Hohlprofil des Maschinenrahmens nicht möglich ist.

Aufgabe der Erfindung ist es, zur Vereinfachung der Fertigungs- und Verbindungstechnik eine modulare Bauweise zu schaffen, die eine komplette Vormontage von Baueinheiten ermöglicht.

Die Erfindung löst die Aufgabe mit den Merkmalen des kennzeichnenden Teils des Anspruchs 1. Hinsichtlich weiterer wesentlicher Ausgestaltungen der Erfindung wird auf die Ansprüche 2 bis 12 verwiesen.

Nach der Erfindung sind die einzelnen Baueinheiten derart modular aufgebaut, daß sie komplett vormontierbar sind und einfach herzustellende Verbindungen ohne angeschweißte Flansche und ohne mechanische Präzisionsbearbeitung auf Bohr- und Fräswerken verwirklichen. Dieses erlaubt eine besonders kostengünstige Fertigung einerseits und im Falle von Reparaturarbeiten eine besonders zeit- und damit kostensparende Demontage mit anschließender Montage ohne besondere Hilfsvorrichtungen.

Weitere Merkmale und Vorteile der Erfindung ergeben sich aus der nachfolgenden Beschreibung und den Zeichnungen, in denen ein Ausführungsbeispiel für den modularen Aufbau eines Kreiselzettwenders einschließlich der Verbindungstechnik zwischen kompletten Zinkenkreiseln und Verbindungsträgern dargestellt ist.

Es zeigt:
- Fig. 1 -: Einen Kreiselzettwender mit sechs Zinkenkreiseln in Ansicht auf die Arbeitsebene.
- Fig. 2 -: Eine Ansicht des Kreiselzettwenders mit sechs Zinkenkreisel entgegen der Fahrtrichtung (F) senkrecht zur Arbeitsebene.
- Fig. 3 -: Einen freigelegten Antriebsstrang des Kreiselzettwenders bestehend aus Winkelgetrieben für die Zinkenkreisel, Mittelgetriebe mit Zapfwellenanschluß, Antriebswellen und Kreuzgelenken.
- Fig. 4 -: Die Einzelheit - (X) in Fig. 3 in vergrößerter Darstellung.
- Fig. 5 -: Die Einzelheit - (Y) in Fig. 3 in vergrößerter Darstellung.
- Fig. 6 -: Die Einzelheit - (Z) in Fig. 3 in vergrößerter Darstellung.
- Fig. 7 -: Die Draufsicht auf den Maschinenrahmen, von oben in Richtung auf die Arbeitsebene.
- Fig. 8 -: Den Maschinenrahmen gesehen entgegen der Fahrtrichtung (F).
- Fig. 9 -: Ein Teil des Maschinenrahmens mit einem Endwinkelgetriebe gesehen entgegen der Fahrtrichtung (F).
- Fig. 10 -: Eine Gelenkverbindung zwischen den Verbindungsträgern.
- Fig. 11 -: Die Ansicht (K) der Fig. 10
- Fig. 12 -: Die Ansicht (H) der Fig. 12
- Fig. 13 -: Den Schnitt D-D in der Fig. 13.
- Fig. 14 -: Die Draufsicht auf den Kastenträger, von oben in Richtung auf die Arbeitsebene.
- Fig. 15 -: Den Schnitt B-B in der Fig. 13.
- Fig. 16 -: Den Schnitt C-C in der Fig. 13.
- Fig. 17 -: Den Schnitt E-E in der Fig. 13.
- Fig. 18 -: Den Kastenträger im Schnitt durch seine Längsachse im verschraubten Zustand mit dem Innengabelgehäuse.
- Fig. 19 -: Ein komplett vormontiertes Winkelgetriebe mit durchgehender Verbindungswelle.
- Fig. 20 -: Der komplette Verbindungsträger im montierten Zustand mit dem Kastenträger, dem Innengabelgehäuse und dem Winkelgetriebe.
- Fig. 21 -: Der Schnitt E-E aus Fig. 20.
- Fig. 22 -: Der Schnitt F-F aus Fig. 20.
- Fig. 23 -: Die komplette modulare Einheit (49), bestehend aus Verbindungsträger, Zinkenkreisel und dem Tast- und Stützrad.

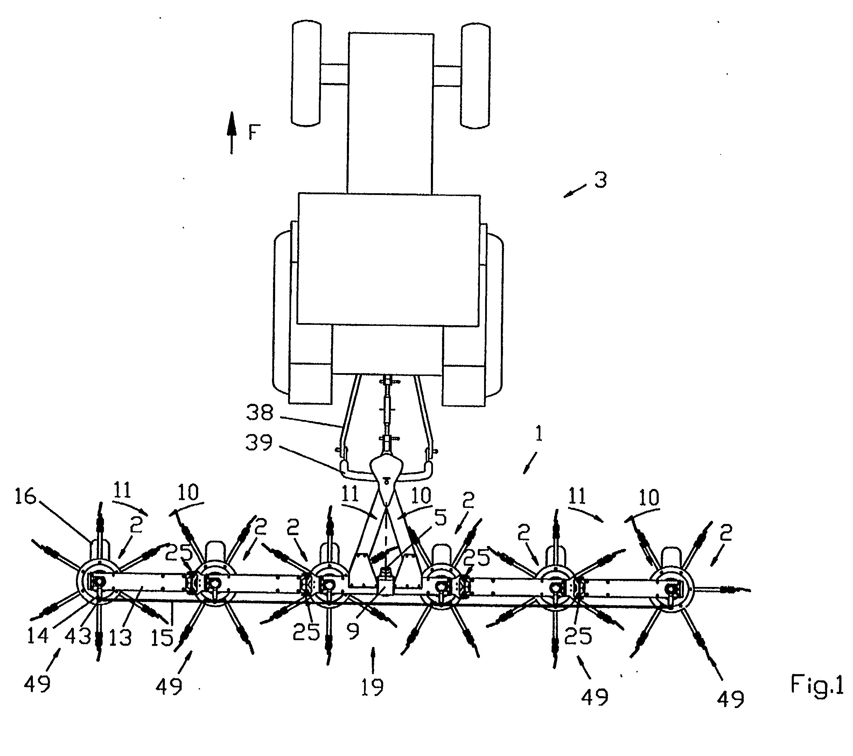

Die Fig. 1 zeigt eine Kombination Traktor (3) und Kreiselzettwender (1) in angebautem Zustand angekoppelt an das Dreipunktgestänge (38) der Dreipunkthydraulik des Traktors (3). Der Kreiselzettwender (1) besteht im wesentlichen aus den Zinkenkreiseln (2), dem Maschinenrahmen (13), welcher die einzelnen Zinkenkreisel (2) in ihren Gelenkverbindungen (25) mit im wesentlichen parallel zur Fahrtrichtung (F) ausgerichteten Gelenkachsen, verbunden mit der Basismaschine (19).

Die Basismaschine (19) besteht im wesentlichen aus zwei Zinkenkreiseln (2), die gegenläufig zueinander drehen mit den Drehrichtungen links (10) bzw. rechts (11), dem Maschinenrahmen (13), bestehend aus dem Mittelgetriebe (9) und dem Verbindungsträger (20), den Verbindungsstreben (40) und dem Tragbock (39).

Die Basismaschine (19) kann beidseitig um weitere Zinkenkreisel (2) ergänzt werden. In diesem Ausführungsbeispiel sind beispielsweise je zwei weitere Zinkenkreisel (2) beidseitig zur Basismaschine (19) dargestellt, so daß insgesamt sechs Zinkenkreisel (2) paarweise gegenläufig zueinander drehend die Arbeitsbreite des Kreiselzettwenders (1) bestimmen. Durch weiteres Hinzufügen von Zinkenkreiseln kann die Arbeitsbreite auf der Basis modularer Stufensprünge vergrößert werden.

Der Kreiselzettwender (1) ist traktorseitig mit der Zapfwelle durch die aus Gründen der besseren Übersichtlichkeit nicht dargestellte Gelenkwelle mit der Profilkeilwelle (5) des Mittelgetriebes (9) verbunden. Alle Zinkenkreisel (2) mit ihren Tast- und Stützrädern (16) sind über Anlenkhebel (14) und das die Anlenkhebel (14) verbindende Lenkgestänge (15) im Gelenkpunkt (43) untereinander verbunden, so daß damit die Laufrichtung der Tast- und Stützräder (16) über einen geeigneten Stellmechanismus, beispielsweise durch einen Hydraulikzylinder, verändert werden kann.

Zur Abtastung der Bodenunebenheiten sind die Zinkenkreisel (2) mit den Tast-und Stützrädern (16) ausgerüstet, und die Zinkenkreisel (2) sind untereinander gelenkig verbunden, damit die Zinkenkreisel (2) sich diesen Bodenunebenheiten anpassen können und die Zinkenkreisel (2) die Grasnarbe nicht beschädigen.

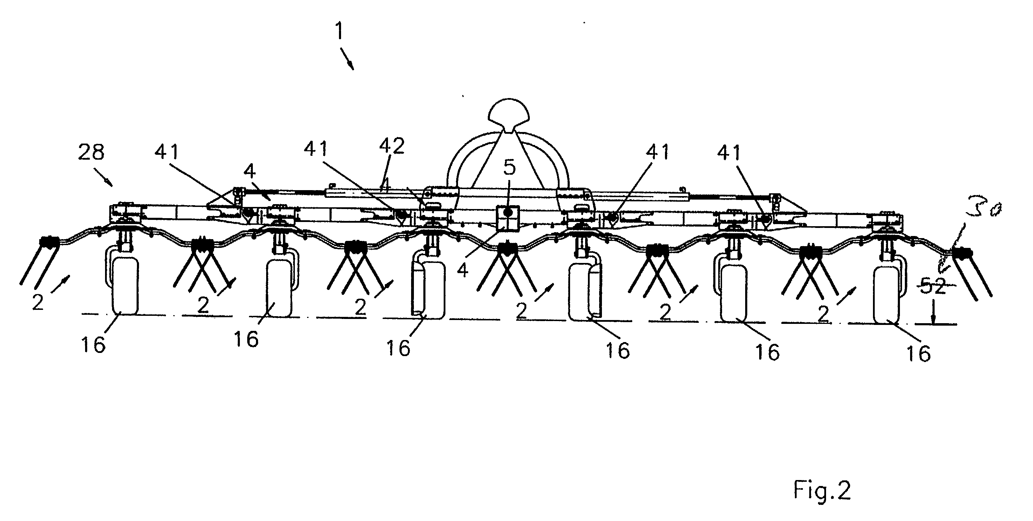

Der Kreiselzettwender (1) ist in Fig. 2 entgegen der Fachrichtung (F) gesehen dargestellt. Zur Verringerung der Transportbreite sind an der Basismaschine (19) des Kreiselzettwenders (1) Hydraulikzylinder (42) angeordnet, welche die beiden äußeren Zinkenkreisel (2) in eine nicht dargestellte Transportstellung um die Gelenkverbindung (25) hochklappen können.

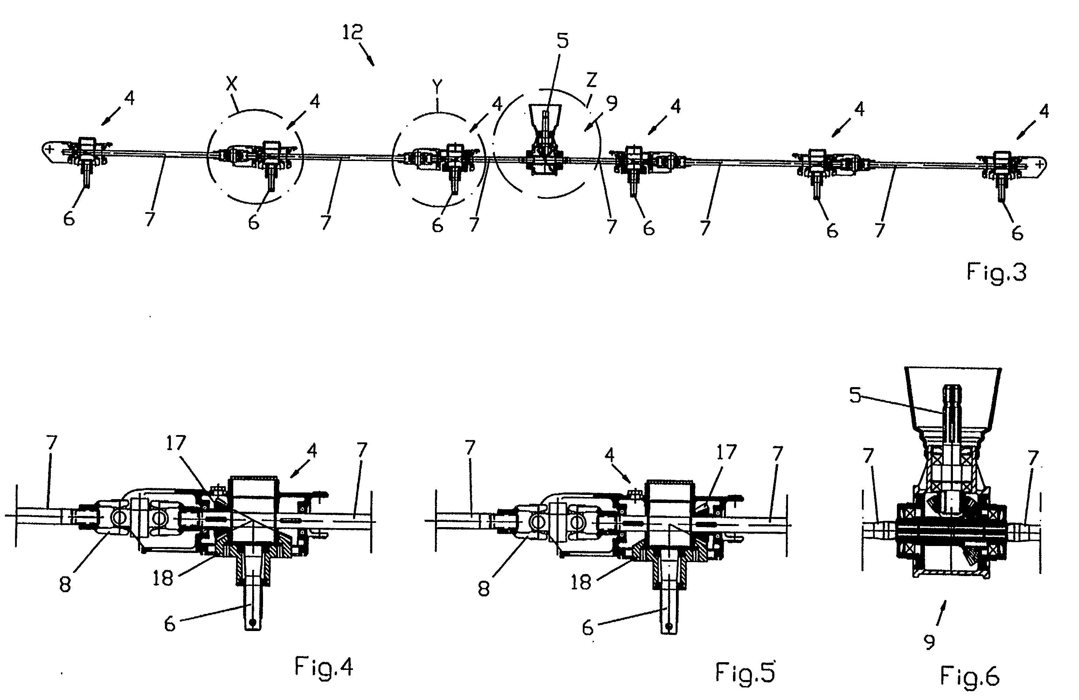

Fig. 3 stellt den freigelegten Antriebsstrang (12) der Zinkenkreisel (2) ohne Maschinenrahmen (13) dar. Das Antriebsdrehmoment des Traktors (3) wird mittels der nicht dargestellten Gelenkwelle auf die Profilkeilwelle (5) des Mittelgetriebes (9) eingeleitet, welches als Kegelradgetriebe ausgebildet ist. Das Antriebsdrehmoment wird auf die Antriebswellen (7) übertragen und von den Winkelgetrieben (4) an die Zinkenkreisel (2) weitergegeben.

In Fig. 4 ist die Einzelheit X der Fig. 3 dargestellt. Sie zeigt einen Schnitt durch ein linksdrehendes Winkelgetriebe (4), wobei das Linksdrehen sich auf die Drehrichtung des Zinkenkreisels (2) bezieht Das Drehmoment wird von dem Kegelradritzel (17) auf das Tellerrad (18) übertragen, mit dem der Zinkenkreisel (2) drehfest verbunden ist. Die Zinkenkreisel (2), die hier nicht dargestellt sind, drehen mit dem Tellerrad (18) um die feststehende Kreiselachse (6) gegenüber dem Maschinenrahmen. Die Antriebswellen (7) sind in den Gelenkpunkten untereinander drehfest mit dem Kreuzgelenk (8) verbunden, das als Doppelkreuzgelenk ausgebildet ist.

In Fig. 5 ist die Einzelheit Y der Fig. 3 dargestellt. Sie zeigt einen Schnitt durch das Winkelgetriebe (4), ausgeführt als rechtsdrehendes Winkelgetriebe (4) analog zu Fig. 4.

In Fig. 6 ist der Schnitt als Einzelheit Z aus Fig. 3 durch das Mittelgetriebe (9) dargestellt, ausgeführt als Kegelradgetriebe mit der Profilkeilwelle (5) zum Anschluß an die Traktorzapfwelle.

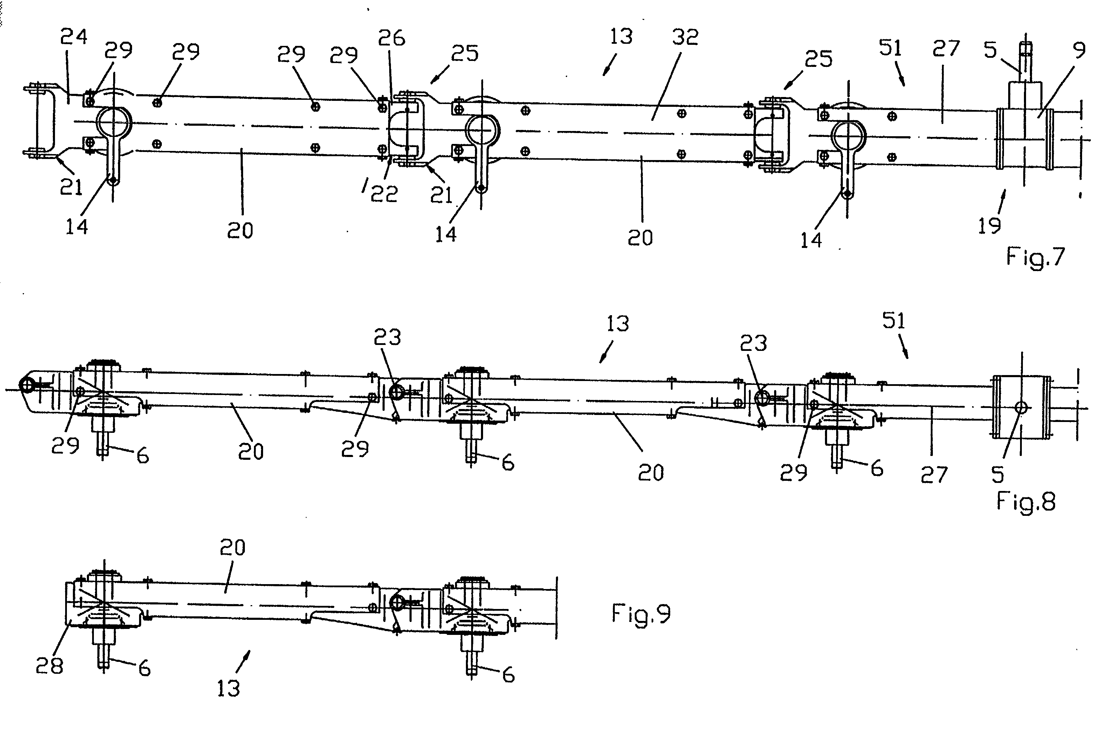

In Fig. 7 ist die Draufsicht der linken Hälfte des Maschinenrahmens (13), gesehen von oben auf die Arbeitsebene (30). Der komplette Maschinenrahmen (13), der in seiner Längsausdehnung von dem in dieser Figur nicht dargestellten Antriebsstrang durchsetzt ist, besteht aus seinem Mittelträger (51), der aus dem Mittelgetriebe (9) mit den beidseitig angeschraubten Flanschkastenträgern (27) besteht und den, in den Gelenkverbindungen (25) angeschlossenen Verbindungsträgem (20). Der Verbindungsträger (20) besteht aus dem Kastenträger (32), dem Winkelgetriebegehäuse (24) und dem Innengabelgehäuse (26). Das Winkelgetriebegehäuse (24), das Innengabelgehäuse (26) und der Kastenträger (32) werden mit den Verbindungsschrauben (29) untereinander verschraubt Die Verbindungsträger (20) sind in ihren Gelenkverbindungen (25) untereinander verbunden. Das Innengabelgehäuse (26) kann mit dem Kastenträger (32) auch zu einer Einheit verschweißt sein.

In Fig. 8 ist der Maschinenrahmen (13) entgegen der Fahrtrichtung (F) gesehen dargestellt.

In Fig. 9 ist analog zur Blickrichtung in Fig. 8 eine Ausführungsform eines außenliegenden Verbindungsträgers als Teil des gesamten Maschinenrahmens (13) dargestellt. In diesem Ausführungsbeispiel ist eine mögliche Ausführungsform eines Winkelgetriebegehäuses ohne Außengabel als Endwinkelgetriebe (28) dargestellt.

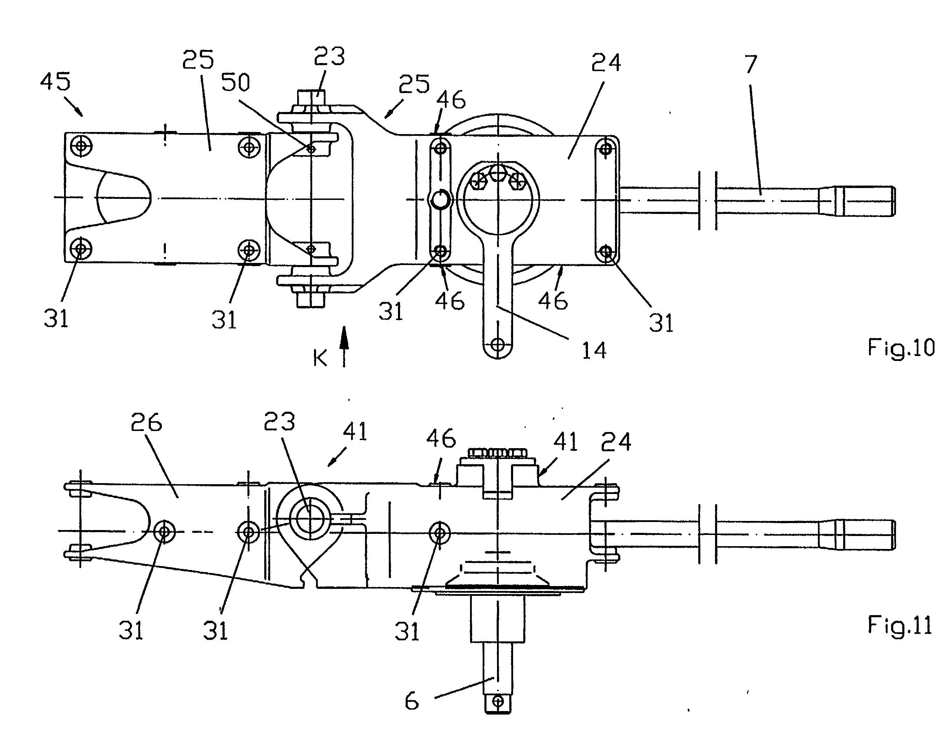

In Fig. 10 ist die Gelenkverbindung (25) bestehend aus der Außengabel (21), als Bestandteil des Winkelgetriebegehäuses (24), der Innengabel (22), welche Bestandteil des Innengabelgehäuses (26) ist, und den Gelenkbolzen (23), die mit der Innengabel (22) mittels der Spannhülsen (50) verstiftet sind. Das Winkelgetriebegehäuse (24) besitzt an den Außenflächen seiner Gehäusewände Anlageflächen (46), und Gewindebohrungen (31), die zur Aufnahme der Verbindungsschrauben zur Befestigung der Kastenträger (32) bzw. Flanschkastenträger (27) bestimmt sind. Das Innengabelgehäuse (26) besitzt an den Außenflächen seiner Gehäusewände Anlageflächen (45), und Gewindebohrungen (31), die zur Aufnahme der Verbindungsschrauben zur Befestigung der Kastenträger (32) bestimmt sind.

In Fig. 11 ist die Ansicht (K) der Fig. 10 dargestellt.

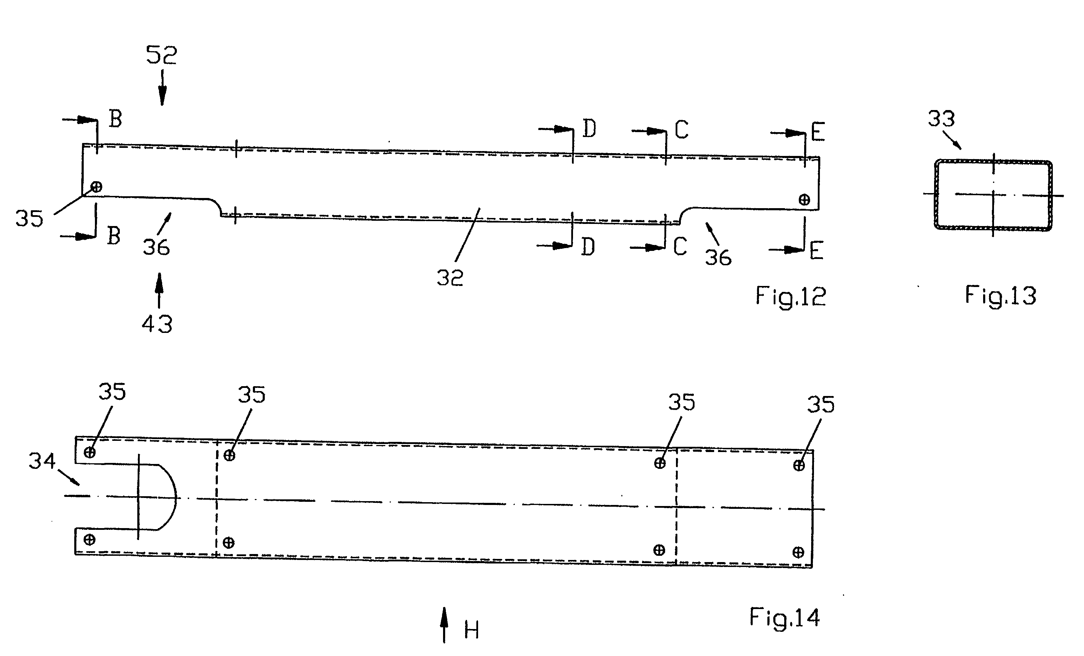

In Fig. 12 ist die Ansicht H der Fig. 14 des Kastenträgers (32) dargestellt

In Fig. 13 ist der Schnitt D-D durch den Kastenträger (32) in Fig. 12 dargestellt.

In Fig. 14 ist die Oberseite (52) des Kastenträgers (32) in seiner Draufsicht auf die Arbeitsebene (30) in Richtung der Arbeitsebene (30) dargestellt, welcher Bestandteil des Verbindungsträgers (20) ist, ausgeführt als Kastenquerschnitt (33) in der Form eines Rechteckhohlprofils. Anstelle eines Kasten- bzw. Rechteckhohlprofils kann grundsätzlich auch jedes andere geeignete Hohlprofil Verwendung finden. Der Kastenträger (32) ist in seiner Längsausdehnung an beiden Enden offen und verfügt zusätzlich über Ausnehmungen (36) an seiner Unterseite (53) und an einem Ende in seiner Längsausdehnung über eine Durchgangsöffnung (34), an seiner Oberseite (52), welche den Durchgang der Kreiselachse (6) durch den Querschnitt des Kastenträgers (32) ermöglicht. Der Kastenträger (32) verfügt über Durchgangsbohrungen (35), die ein Verschrauben des Kastenträgers (32) mit dem Winkelgetriebegehäuse (24) und dem Verschrauben mit dem Innengabelgehäuse (26) ermöglicht.

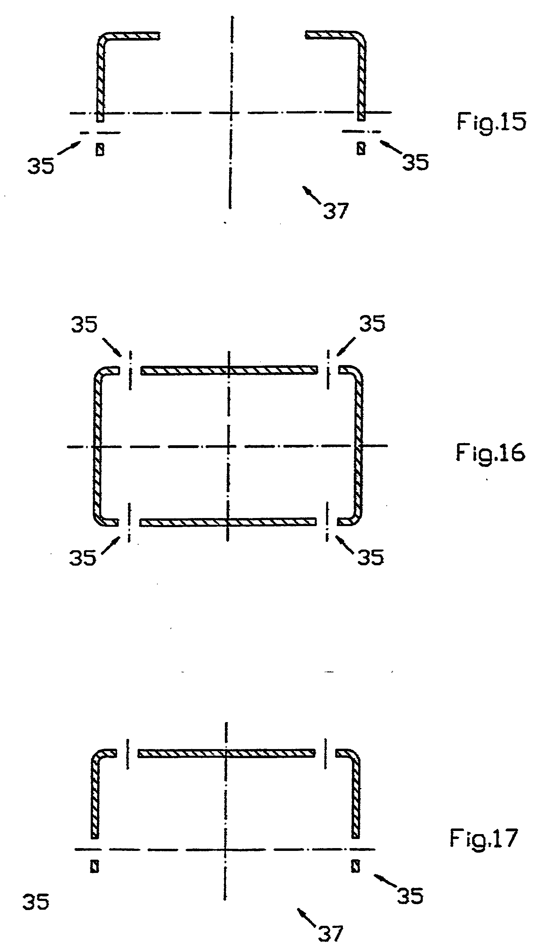

In Fig. 15 ist der Schnitt B-B durch den Kastenträgers (32) in Fig. 13 dargestellt.

In Fig. 16 ist der Schnitt C-C durch den Kastenträgers (32) in Fig. 13 dargestellt.

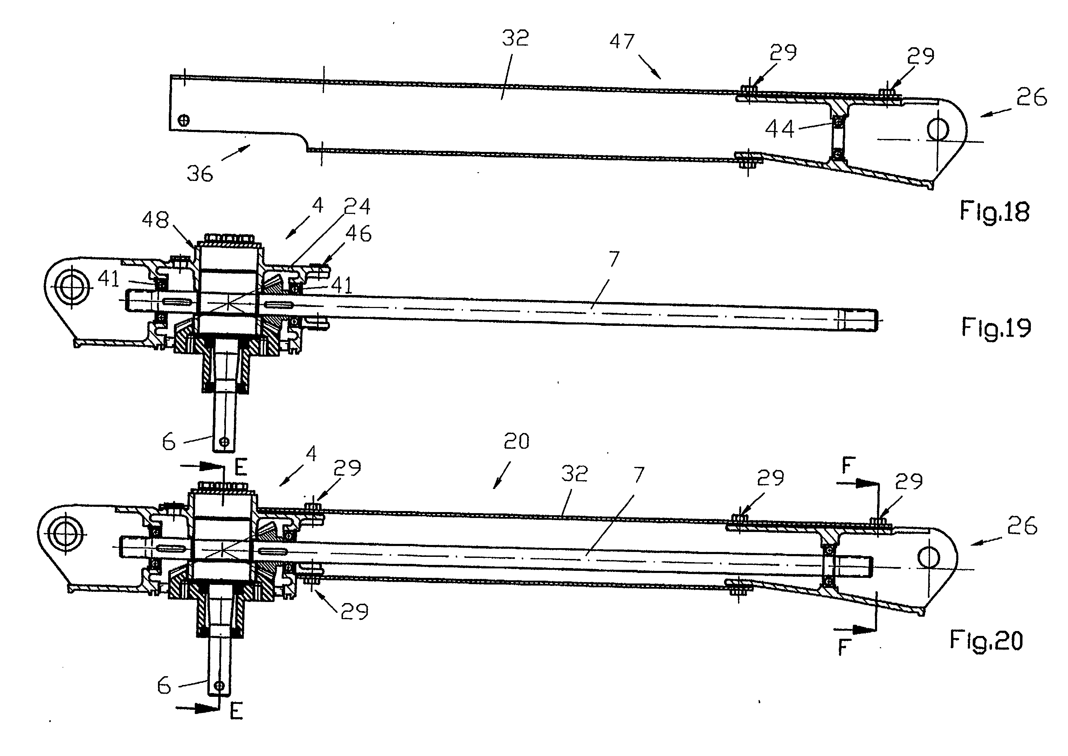

In Fig. 17 ist der Schnitt E-E durch den Kastenträgers (32) in Fig. 13 dargestellt.

In Fig. 18 ist der Kastenträger (32) im Schnitt durch seine Längsachse im verschraubten Zustand mit dem Innengabelgehäuse (26) dargestellt, welches im Inneren ein Stützlager (44), ausgeführt als Kugellager, trägt. Der Kastenträger (32) ist mit dem Innengabelgehäuse (26) mittels der Verbindungsschrauben (29), verschraubt, deren Gewindebohrungen (31) in der Gehäusewand des Innengabelgehäuses untergebracht sind.

Fig. 19 zeigt ein komplett vormontiertes Winkelgetriebe (4) mit durchgehender Antriebswelle (7). Die Antriebswelle (7) durchquert das Winkelgetriebegehäuse (24) und ist drehbar mit den Wälzlagern (41) des Winkelgetriebegehäuses (24) verbunden.

In Fig. 20 ist der komplette Verbindungsträger (20) im montierten Zustand mit dem Kastenträger (32), dem Innengabelgehäuse (26) und dem Winkelgetriebe (4) ist dargestellt. Die Gewindebohrungen (31) zur Aufnahme der Verbindungsschrauben (31) befinden sich in der Begrenzungswand des Winkelgetriebegehäuses (24).

Die vormontierte Kastenträgereinheit (47) besteht aus dem Kastenträger (32) mit dem Innengabelgehäuse (26) einschließlich des Stützlagers (44), der an beiden Enden des sich in seiner Längsausdehnung erstreckenden Kastenträgers (32) offene Querschnitt, und die Ausnehmungen (36) ermöglichen die Montage des vormontierten Kastenträgers (32) derart, daß diese über die Antriebswelle (7) in axialer Richtung bewegt werden kann, so daß die Antriebswelle (7) durch Innenbohrung des Stützlagers (44) hindurchgeführt werden kann und der Kastenträger (32) das Winkelgetriebegehäuse (24) derart übergreifen kann, daß der Kastenträger (32) mit dem Winkelgetriebegehäuse (24) mittels der Verbindungsschrauben (29) verschraubt werden kann. Die Durchgangsöffnung (34) des Kastenträgers (32) ermöglicht den Durchgang der Gehäusenaben (48) zur Lagerung der Kreiselachse (6) durch den Kastenquerschnitt (33) des Kastenträgers (32).

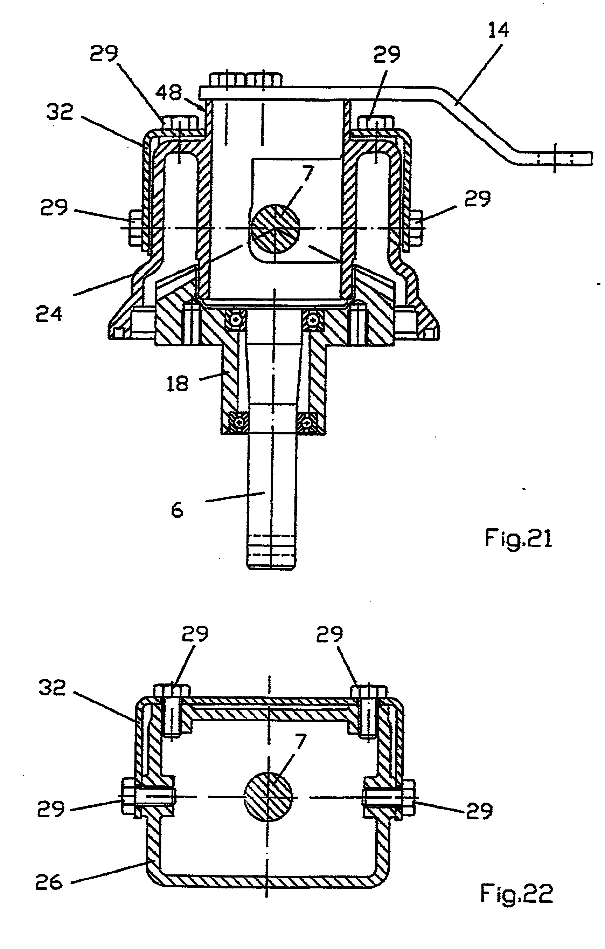

Fig. 21 zeigt den Schnitt E-E aus Fig. 20. In dieser Figur ist die Lage des Kastenträgers (32) durch seine Verschraubung mit dem Winkelgetriebegehäuse (24) dargestellt. Der Querschnitt des Kastenträgers (32) gemäß dem Querschnitt des Schnittverlaufs B-B in Fig. 12, welcher in Fig. 15 dargestellt ist, übergreift das Winkelgetriebegehäuse (24) in der dargestellten Weise und ist mit dem Winkelgetriebegehäuse (24) mittels der Verbindungsschrauben (29) verschraubt. Des weiteren zeigt der Schnittverlauf die Lagerung der, durch den Anlenkhebel (6) in seiner Winkelstellung zur Fahrtrichtung (F) fixierten, Kreiselachse (6). Bedingt durch die Durchgangsöffnung (34) des Kastenträgers (32) kann die Gehäusenabe (48) den Kastenträger (32) durchdringen, so daß die Kreiselachse (6) ebenfalls den Kastenträger durchdringen kann und der Anlenkhebel (14) oberhalb des Kastenträgers (32) mit der Kreiselachse (6) drehfest verschraubt werden kann.

Fig. 22 zeigt den Schnitt F-F aus Fig. 20, um das Übergreifen des Kastenträgers (32) über das Innengabelgehäuse (26) darzustellen.

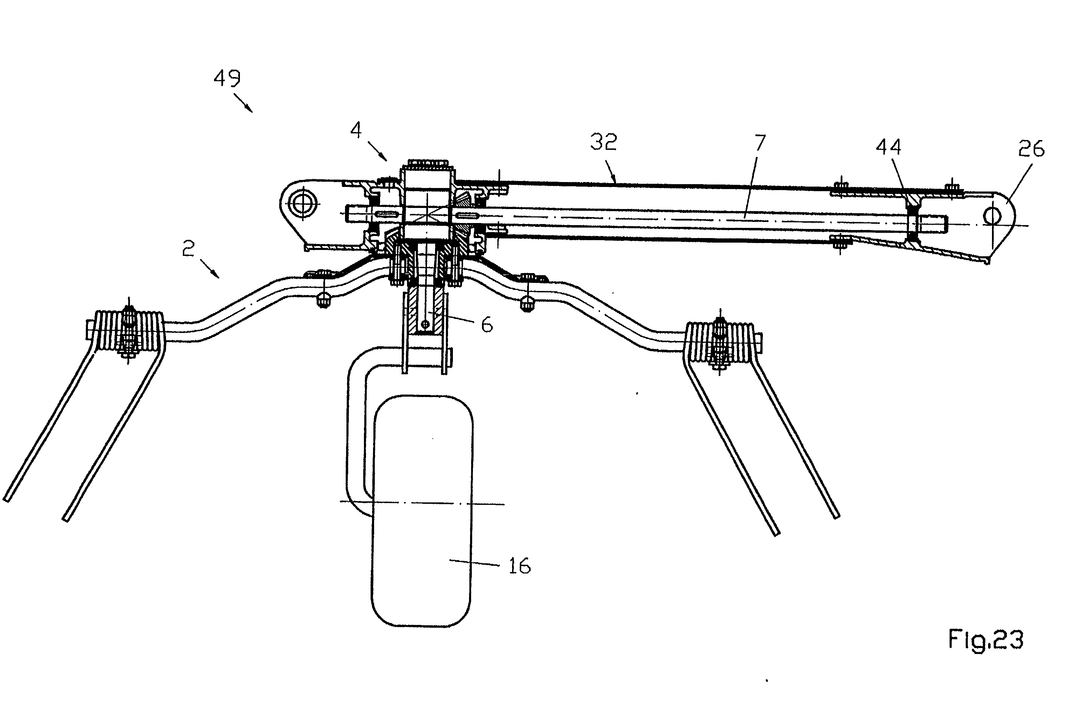

In Fig. 23 ist die komplette Zinkenkreiseleinheit als modulare Einheit (49), bestehend aus Zinkenkreisel (2), Winkelgetriebegehäuse (4) mit Kreiselachse (6), Kastenträger (32) Innengabelgehäuse (26) Und Tast- u. Stützrad (16) dargestellt.

Der innere Aufbau dieser modularen Einheit (49), bedingt durch die konstruktive Ausbildung des Kastenträgers (32) in Verbindung mit dem das Winkelgetriebe(4) klammerförmig übergreifende Ende des Kastenträgers ermöglichen eine komplette Vormontage des Winkelgetriebes (4) mit der den Kastenträger in seiner Längsachse durchquerenden Antriebswelle (7), so daß diese vormontierte Einheit auf besonders einfache und kostensparende Art mit dem Kastenträger (32) und dem Innengabelgehäuse (26), welche das Stützlager (44) der Antriebswelle (7) aufnimmt, zusammengesteckt und durch einfache Verbindungsschrauben, beispielsweise Sechskantschrauben, verbunden werden können.

Das Winkelgetriebegehäuse (4) mit integrierter Außengabel (21), der Kastenträger (32) als geschlossener Kastenquerschnitt (33) und das Innengabelgehäuse (26) mit integrierter Innengabel (22) und integriertem Stützlager (44) in Kombination mit der konstruktiven Ausgestaltung des Übergangsquerschnittes des Kastenträgers (32) innerhalb der Kraftübergangsbereiche zwischen Kastenträger (32) und Winkelgetriebegehäuse (4) einerseits und Kastenträger (32) und Innengabelgehäuse (26) andererseits ermöglichen den für den Kraftfluß erforderlichen Übergang unter Einbeziehung der drei tragenden Elemente, Kastenträger (32), Winkelgetriebegehäuse (24) und Innengabelgehäuse (26) als Verbindungsträger (20) zwischen den Zinkenkreiseln untereinander als biege- und torsionssteife Einheit.

Diese Art der modularen Bauweise ermöglicht außerdem eine einfache und kostengünstige Erweiterung der Kreiselzettwender auf größere Arbeitsbreiten.

## Patentansprüche

1. Kreiselzettwender (1) mit mehreren in Fahrtrichtung im Abstand nebeneinander angeordneten, um von Kreiselachsen (6) gebildete Hochachsen drehbar gelagerten, an einem Maschinenrahmen (13) jeweils im Bereich eines Winkelgetriebes (4) abgestützten Zinkenkreiseln (2), die sich jeweils über ein Tast- und Stützrad (16), das mit der Kreiselachse (6) drehfest verbunden ist, auf dem Boden abstützen, wobei der Maschinenrahmen (13) mehrere, einzelne Zinkenkreisel (2) untereinander verbindende Verbindungsträger (20) umfaßt, die mittels einer Gelenkverbindung (25) um im wesentlichen horizontal ausgerichtete, fahrtrichtungsparallele Gelenkachsen gelenkig verbunden sind, und mit einem Antriebsstrang (12), der von einem Mittelgetriebe (9) ausgehende Antriebswellen (7), die Antriebswellen (7) verbindende Kreuzgelenke (8) und je Zinkenkreisel (2) ein Winkelgetriebe (4) umfaßt, **dadurch gekennzeichnet,** daß jeweils ein Winkelgetriebe (4) mit durchgreifend angeordneter Antriebswelle (7), Kreiselachse (6) vorzugsweise mit Zinkenkreisel (2) und an das Winkelgetriebegehäuse (24) angeschlossenem Verbindungsträger (20) eine vorfertigbare, modulare Baueinheit (49) bildet.

2. Kreiselzettwender nach Anspruch 1, **dadurch gekennzeichnet,** daß der Verbindungsträger (20) als Hohlprofilträger (32) ausgebildet ist, der das ihm in der Baueinheit zugeordnete Winkelgetriebegehäuse (24) an dessen oberen und seitlichen Außenflächen (45,46) klammerförmig übergreift und mit dem Winkelgetriebegehäuse (24) durch Schrauben (29) verbunden ist.

3. Kreiselzettwender nach Anspruch 1 oder 2, **dadurch gekennzeichnet,** daß der Verbindungsträger (20) als über die zur Baueinheit gehörige Antriebswelle (7) hinweg axial in seine Verbindungsstellung auf dem Winkelgetriebegehäuse (24) aufschiebbarer Kastenträger (32) ausgebildet ist, der an seinem das Winkelgetriebegehäuse (24) über- und seitlich umgreifenden Ende mit an das Winkelgetriebegehäuse (24) angepaßten Ausnehmungen (34,36) versehen sowie stirnseitig offen ist.

4. Kreiselzettwender nach einem der Ansprüche 1 bis 3, **dadurch gekennzeichnet,** daß der Verbindungsträger (20) an seinem dem Winkelgetriebegehäuse (24) seiner Baueinheit abgewandten Ende stirnseitig offen und unterseitig mit einer Ausnehmung (36) versehen und mit einem in dieses Ende einsetzbaren Innengabelgehäuse (26) als Teil der Gelenkverbindung (25) verbunden ist

5. Kreiselzettwender nach einem der Ansprüche 1 bis 4, **dadurch gekennzeichnet,** daß im Innengabelgehäuse (26) ein Stützlager (44) die Antriebswelle (7) in Verbindungsstellung der Teile nahe ihres dem Mittelgetriebe (9) zugewandten Endes lagert.

6. Kreiselzettwender nach einem der Ansprüche 1 bis 5, **dadurch gekennzeichnet,** daß das Winkelgetriebegehäuse (24) auf seiner dem Verbindungsträger (20) in der Baueinheit abgewandten Seite einen eine Außengabel (21) der Gelenkverbindung (25) bildenden Ansatzteil aufweist.

7. Kreiselzettwender nach einem der Ansprüche 1 bis 6, **dadurch gekennzeichnet,** daß die Antriebswelle (7) im Winkelgetriebegehäuse (24) zweifach gelagert ist und je nach vorgesehener Drehrichtung für den Zinkenkreisel (2) auf der einen oder auf der anderen Seite der Kreiselachse (6) ein Teil des Winkelgetriebes (4) bildendes Kegelrad (17) trägt.

8. Kreiselzettwender nach einem der Ansprüche 1 bis 7, **dadurch gekennzeichnet**, daß die Kreiselachse (6) im Winkelgetriebegehäuse (24) axial ortsfest, jedoch um ihre Mittelachse schwenkbar abgestützt ist, sich mit ihrem oberen Endteil aus dem Winkelgetriebegehäuse (24) durch die Ausnehmung (34) im Verbindungsträger (20) hindurch nach oben vorsteht und an dem oberen vorstehenden Ende mit einem Anlenkhebel (14) verbunden ist, der mit einem Lenkgestänge (15) gelenkig verbindbar ist.

9. Kreiselzettwender nach einem der Ansprüche 1 bis 8, **dadurch gekennzeichnet,** daß er eine die Maschinenmitte einnehmende Basismaschine (19) aufweist, die im wesentlichen einen zwei gegenläufig drehbare Zinkenkreisel (2) abstützenden Mittelträger (51) mit einem Mittelgetriebe (9) und zwei an dieses auf entgegengesetzten Seiten angeschraubten Flanschkastenträgem (27) umfaßt und mittels Verbindungsstreben (40) und einem Tragbock (39) mit einem Zugfahrzeug (3) verbindbar ist.

10. Kreiselzettwender nach Anspruch 9, **dadurch gekennzeichnet,** daß die Flanschkastenträger (27) an ihrem dem Mittelgetriebe (9) abgewandten Ende jeweils eine dem Verbindungsträger (20) entsprechende Formgestalt aufweisen und mit einem Winkelgetriebegehäuse (24) eines dem Winkelgetriebe (4) in einer Baueinheit (49) entsprechenden Winkelgetriebe verbunden sind.

11. Kreiselzettwender nach einem der Ansprüche 1 bis 10, **dadurch gekennzeichnet,** daß das Winkelgetriebegehäuse (24) für in dem Kreiselzettwender endseitig angeordnete Baueinheiten (49) als Endwinkelgetriebegehäuse (28) ohne Außengabel (21) ausgebildet ist.

12. Kreiselzettwender nach einem der Ansprüche 1 bis 11, **dadurch gekennzeichnet,** daß er aus der Basismaschine (19) und beidseits zumindest eine an diese angeschlossene Baueinheit (49) besteht und durch Anschluß weiterer Baueinheiten (49) erweiterbar ist.

## Claims

1. Rotary tedders and turners (1) arranged next to each other at a certain spacing, seen in running direction, mounted in rotary bearings in vertical axles formed by gyroscopic axles (6) and with rotary tines (2) resting on a machine frame (13) in the area of each of the angular gearing (4) and supported on the ground each by means of a tracing and support wheel (16) which turn as a unit connected to the gyroscopic axle (6), whereby the machine frame (13) encompasses several connection supports (20) joining individual interrelated rotary tines (2), the supports being link joined using a link joint (25) around articulated axles arranged in parallel seen in the running direction and predominantly of a horizontal arrangement, and further encompassing a drive assembly (12) with drive shafts (7), universal joints (8) connecting the drive shafts (7) and one angular gearing (4) per rotary tine (2) starting from a central gearing (9), **characterised in that** each of the angular gearings (4) forms a pre-finishable modular assembly group (49) by its full length drive shaft (7), the gyroscopic axle (6), preferably with rotary tine (2) and a connection support (20) fitted to the housing (24) of the angular gearing.

2. Rotary tedders and turners in accordance with claim 1, **characterised in that** the connection support (20) is designed as a hollow chamber sectional steel carrier beam (32) which grips and holds (clamping effect) the angular gearing housing (24) being part of the entire assembly group on the upper and lateral external surfaces of the housing (45/46), and which is bolted (29) to the angular gearing housing (24).

3. Rotary tedders and turners in accordance with claim 1 or 2, **characterised in that** the connection support (20) is of a slide-on box carrier (32) design moving axially beyond the drive shaft (7), forming part of the assembly group, and into its connecting position on the angular bearing housing (24), the box carrier having cut-outs (34/36) adapted to the angular gearing housing (24) at the end where it grips and holds the angular gearing housing (24) on top and at the side and is open at its narrow end.

4. Rotary tedders and turners in accordance with one of claims 1 to 3, **characterised in that** the connection support (20) has a cut-out (36) below and an open narrow end opposite of its angular gearing housing (24) of its assembly group, and is connected to an internal fork housing (26) insertable at this end, being part of the link joint (25).

5. Rotary tedders and turners in accordance with one of claims 1 to 4, **characterised in that** in the internal fork housing (26) a support bearing (44) accommodates the drive shaft (7) when the parts are in the connecting position close to their end towards the central gearing (9).

6. Rotary tedders and turners in accordance with one of claims 1 to 5, **characterised in that** the angular gearing housing (24) is equipped, on the side of the assembly group opposite of its connection support (20), with an attachment part formed by an external fork (21) of the link joint (25).

7. Rotary tedders and turners in accordance with one of claims 1 to 6, **characterised in that** the drive shaft (7) in the angular gearing housing (24) runs in a double bearing, and has, depending on the rotary direction required for the rotary tine (2), a bevel wheel (17) as part of the angular gearing (4) on the one or the other side of the gyroscopic axle (6).

8. Rotary tedders and turners in accordance with one of claims 1 to 7, **characterised in that** the gyroscopic axle (6) in the angular gearing housing (24) is stationary in axial direction, but can swing around its middle axis, extends with its upper end section out of the angular bearing housing (24) through the cut-out (34) and through the connection support (20) to protrude at the top, and that its upper protruding end is connected to a coupling lever (14) which can be articulated with a steering linkage (15).

9. Rotary tedders and turners in accordance with one of claims 1 to 8, **characterised in that** it comprises of a basic machine (19) occupying the machine centre and encompassing predominantly a centre support (51), supporting two rotary tines (2) turning in opposite direction to each other, with a central gearing (9) and two flange box carriers (27) bolted to it on the opposite sides, and can be connected to a tractor (3) by means of connecting rods (40) and a carrier block (39).

10. Rotary tedders and turners in accordance with claim 9, **characterised in that** the shape of the flange box carriers (27) at the end opposite of the central gearing (9) is of a design matching the individual connection support (20) and they are connected to an angular gearing housing (24) of an angular gearing which corresponds to the angular gearing (4) of an assembly group (49).

11. Rotary tedders and turners in accordance with one of claims 1 to 10, **characterised in that** the angular gearing housing (24) for assembly groups (49) arranged at the end of the rotary tedder and turner is designed as an end angular gearing housing (28) without external fork (21).

12. Rotary tedders and turners in accordance with one of claims 1 to 11, **characterised in that** it is composed of the basic machine (19) and at both sides at least one assembly group (49) connected to it and that it can be extended by connecting further assembly groups (49).

## Revendications

1. Faneuse à rotors(1) comportant plusieurs rotors à dents (2), juxtaposés à distance transversalement à la direction de déplacement, et tournant autour d'axes montants formés par les axes (6) des rotors, et s'appuyant chaque fois sur le châssis (13) de la machine au niveau d'une transmission d'angle (4), et sur le sol chaque fois par une roue palpeuse de sustentation (16) solidaire en rotation de l'axe (6) du rotor, le châssis (13) de la machine comprenant plusieurs poutres de liaison (20) reliant entre eux les différents rotors à dents (2), ces poutres étant reliées entre elles de manière articulée par une articulation (25) autour d'axes d'articulation essentiellement horizontaux, parallèles à la direction de déplacement, et une ligne de transmission (12) comprenant, partant d'une transmission médiane (9), des arbres d'entraînement (7), des articulations à cardan (8) reliant les arbres d'entraînement (7) et pour chaque rotor à dents (2), une transmission d'angle (4), caractérisé en ce que chaque fois une transmission d'angle (4) avec un arbre d'entraînement (7) traversant, un axe de rotor (6) de préférence avec un rotor à dents (2), et une poutre de liaison (20) raccordée au carter de transmission d'angle (24), constituent une unité de construction (49) modulaire préfabriquée.

2. Faneuse à rotors selon la revendication 1, caractérisée en ce que la poutre de liaison (20) est une poutre à profil creux (32) qui chevauche le carter de transmission d'angle (24) associé à cette unité constructive, par sa surface supérieure et ses surfaces latérales (45,46) à la manière d'une pince et est reliée au carter (24) de la transmission d'angle par des vis (29).

3. Faneuse à rotors selon la revendication 1 ou 2, caractérisée en ce que la poutre de liaison (20) est réalisée comme poutre en caisson (32), qui peut s'engager par-dessus le carter de transmission d'angle (24) en venant par-dessus l'arbre d'entraînement (7) appartenant à l'unité de construction, axialement jusque dans sa position de liaison, et la poutre en caisson est ouverte à son extrémité entourant le dessus et les côtés du carter de transmission d'angle (24), avec des cavités (34,36) adaptées au carter de transmission d'angle (24) et en étant ouverts sur la face frontale.

4. Faneuse à rotors selon l'une quelconque des revendications 1 à 3, caractérisée en ce que la poutre de liaison (20) comporte à son extrémité non tournée vers le carter de transmission d'angle (24) de son unité de construction, une extrémité frontale ouverte et en dessous, une cavité (36) et un carter à fourche intérieure (26) qui se place dans cette extrémité et fait partie d'une liaison articulée (25).

5. Faneuse à rotors selon l'une quelconque des revendications 1 à 4, caractérisée en ce que dans le carter à fourche intérieure (26), on a un palier de support (44) qui monte l'arbre d'entraînement (7) en position de liaison des pièces à proximité de son extrémité tournée vers la transmission médiane (9).

6. Faneuse à rotors selon l'une quelconque des revendications 1 à 5, caractérisée en ce que le carter de transmission d'angle (24) comporte sur son côté non tourné vers la poutre de liaison (20), dans l'unité de construction, une pièce de montage formant une fourche extérieure (21) pour la liaison articulée (25).

7. Faneuse à rotors selon l'une quelconque des revendications 1 à 6, caractérisée en ce que l'arbre d'entraînement (7) est monté dans deux paliers du carter de transmission d'angle (24) et suivant le sens de rotation prévu pour le rotor à dents (2), l'arbre d'entraînement porte d'un côté ou de l'autre de l'axe (6) du rotor, une roue conique (17) faisant partie de la transmission d'angle (4).

8. Faneuse à rotors selon l'une quelconque des revendications 1 à 7, caractérisée en ce que l'axe (6) du rotor est axialement fixe dans le carter de transmission d'angle (24) mais est appuyé de manière pivotante autour de son axe médian, et avec son extrémité supérieure, cet axe dépasse du haut du carter de transmission d'angle (24) par une découpe (34) dans la poutre de liaison (20) et son extrémité qui dépasse vers le haut est reliée à un levier d'articulation (14) lui-même relié de manière articulée à une tringlerie (15).

9. Faneuse à rotors selon l'une quelconque des revendications 1 à 8 caractérisée en ce qu'elle comporte une machine de base (19) occupant le milieu de la machine et qui comprend essentiellement une poutre médiane (51) soutenant deux rotors à dents (2) tournant à sens opposé avec sa transmission médiane (9) et deux poutres à caisson à bride (27) vissées sur les deux côtés opposés, ainsi que les entretoises de liaison (40) et un bloc de support (39) pour être relié au tracteur (3).

10. Faneuse à rotors selon la revendication 9, caractérisée en ce que les poutres en caisson à bride (27) comportent à leur extrémité chaque fois opposée à la transmission médiane (9), une forme correspondant à la poutre de liaison (20) et sont reliées à un carter de transmission d'angle (24) d'une transmission d'angle correspondant à la transmission d'angle (4) d'une unité de construction (49).

11. Faneuse à rotors selon l'une quelconque des revendications 1 à 10 caractérisée en ce que le carter de la transmission d'angle (24) est réalisé pour des unités de construction (49) prévues d'un côté dans la faneuse à rotors comme carter de transmission d'angle d'extrémité (28) sans fourche extérieure (21).

12. Faneuse à rotors selon l'une quelconque des revendications 1 à 11 caractérisée en ce qu'elle se compose de la machine de base (19) avec de part et d'autre au moins une unité de construction (49) reliée à cette machine de base et elle peut être élargie par le branchement d'autres unités de construction (49).
